# FASCICULE DE BREVET EUROPEEN

(11) **EP 3 320 953 B1**
(45) Date de publication et mention de la délivrance du brevet: **04.09.2019**
(21) Numéro de dépôt: 17201307.0
(22) Date de dépôt: 13.11.2017
(51) Int. Cl.: A62B 35/00, D07B 1/18, D07B 5/00, F16G 11/14

(54) **CONNECTEUR TEXTILE**
TEXTILES VERBINDUNGSELEMENT
TEXTILE CONNECTOR

(30) Priorité: 14.11.2016 FR 1661007
(43) Date de publication de la demande: 16.05.2018
(73) Titulaire: Zedel, 38920 Crolles (FR)
(72) Inventeur: MAURICE, Alain, 38660 Saint Hilaire du Touvet (FR); MAGNIER, Patrick, 38660 Saint Hilaire du Touvet (FR); FOURGOUS, Barnabé, 38250 Lans en Vercors (FR)
(74) Mandataire: Talbot, Alexandre

(56) Documents cités:
- EP-A1- 1 634 844
- EP-A1- 2 955 548
- WO-A1-2008/058300
- DE-A1- 1 962 970
- DE-A1-102011 000 390
- FR-A1- 2 893 378
- US-B1- 6 189 651

## Description

### Domaine technique de l'invention

L'invention est relative à un connecteur textile, à un procédé de fabrication du connecteur textile et à un procédé d'utilisation du connecteur textile.

### État de la technique

Dans le domaine de l'escalade, de l'alpinisme, du ski de randonnée, ou pour réaliser des travaux en hauteur, il est courant d'accrocher un équipement à un point fixe par l'intermédiaire d'un mousqueton en matériau métallique. Les mousquetons sont généralement en alliage d'aluminium et plus rarement en acier.

Selon les besoins, les mousquetons utilisés présentent des formes différentes, des résistances mécaniques différentes, des ouvertures différentes. Par exemple, un travailleur acrobatique ou cordiste utilise et transporte une très grande quantité de mousquetons afin de s'assurer et de réaliser ses travaux.

De manière évidente, plus la quantité d'équipement transporté est importante et plus le poids associé est conséquent. Le transport et la gestion de masses additionnelles par le cordiste se traduit par de la fatigue et des risques de déséquilibre accrus.

Dans le domaine de la voile et du nautisme, de nombreux connecteurs métalliques sont utilisés et notamment des manilles en acier inoxydables. Ces dernières ont été remplacées par des manilles à étranglement en textiles afin de réduire le poids de l'accastillage embarqué sur les bateaux.

La manille textile à étranglement est réalisée à partir d'une corde munie d'une tresse externe en dyneema®, c'est-à-dire en polyéthylène de masse molaire très élevée.

Une épissure est formée dans la tresse à section circulaire de manière à former une boucle. Plus précisément, une extrémité de la corde passe à l'intérieur de la tresse de la même corde pour former la boucle. Les deux extrémités de la corde qui se trouvent sur le côté opposé à la boucle sont nouées ensemble afin de former un noeud, c'est-à-dire une zone qui présente une section nettement plus importante que le reste de la corde car le noeud est formé par les deux brins de la corde.

Afin de verrouiller la manille, le noeud formé par les deux brins de la corde est inséré dans la boucle et la boucle est refermée en faisant coulisser la portion de corde qui se trouve à l'intérieur de la tresse. Le noeud est étranglé dans la boucle ce qui verrouille la manille. Un exemple de réalisation est présenté dans le document FR2893378 ou dans le document EP 2955548.

Il apparaît qu'une telle manille est intéressante car le poids est limité et les performances mécaniques sont suffisantes pour de nombreuses utilisations. Cependant, ce mode de réalisation n'est pas satisfaisant car après sollicitation, la manille textile qui a été et mise sous tension est très difficilement démontable. En particulier, il est très difficile de faire coulisser la gaine pour agrandir la boucle.

Afin de corriger ce problème, une variante de réalisation est proposée. Dans ce mode de réalisation, une deuxième corde de section bien plus réduite est insérée dans la portion de la tresse externe. En tirant sur la deuxième corde, il est possible d'ouvrir la boucle ce qui facilite le desserrage de la manille après utilisation.

Cependant, il apparait que la réalisation d'une telle manille est compliquée à mettre en oeuvre car une étape d'épissure doit être réalisée ce qui est particulièrement difficile à industrialiser.

Il est également connu de réaliser des connecteurs textiles dans le domaine du parapente avec des cordes ou des sangles en polyamide, polyester ou en Dyneema ®. Là encore, il apparait que l'utilisation de tels produits n'est pas possible dans le domaine des travaux en hauteur et d'une manière plus générale dans le domaine de la verticalité car ces connecteurs textiles sont destinés à connecter définitivement ou quasi-définitivement deux éléments. Le démontage n'est donc pas aisé lorsque le connecteur a été noué, mis sous tension, mouillé et éventuellement recouvert de boue.

Dans un domaine complètement différent, il est connu d'utiliser un connecteur textile dont les deux extrémités sont formées par une boucle. Une des boucles coopère avec un mousqueton qui est utilisé pour connecter l'autre boucle.

Il est également connu de former un connecteur à étranglement au moyen d'un oeillet coulissant qui coopère avec un téton disposé à l'extrémité d'une corde. L'autre extrémité de la corde possède une boucle qui enserre un anneau métallique.

Les documents WO 2008/058300 A1, DE 10 2011 000390 A1, EP 2 955 548 A1, FR 2 893 378 A1, DE 19 62 970 A1, EP 1 634 844 A1, US 6 189 651 B1, décrivent des connecteurs textiles de l'art antérieur.

### Objet de l'invention

Un objet de l'invention consiste à prévoir un connecteur textile plus facile à mettre en oeuvre et dont l'utilisation au quotidien est améliorée.

Le connecteur textile est remarquable en ce qu'il comporte:
- une sangle ayant une partie centrale séparant une première extrémité et une deuxième extrémité, la partie centrale ayant une première section,
- la première extrémité possédant une section plus importante que la partie centrale,
- la deuxième extrémité possédant une boucle autorisant le passage de la première extrémité dans la boucle,
- un organe de préhension de la boucle connecté directement à la boucle.

Le connecteur est remarquable en ce que l'ouverture de la boucle est fixe et en ce que la première extrémité forme une butée de blocage configurée pour empêcher le passage de la partie centrale ou de la deuxième extrémité au-dessus de la deuxième extrémité lorsque la partie centrale glisse le long de la sangle.

Dans un développement, la butée de blocage est formée par une zone repliée de la sangle sur elle-même au moyen d'une première pliure.

Dans un mode de réalisation particulier, la deuxième extrémité comporte une seconde pliure, la butée de blocage est formée par la seconde pliure.

De manière avantageuse, la sangle possède une section rectangulaire.

Il est intéressant de prévoir que l'organe de préhension de la boucle soit fixé à la boucle de manière opposée à la partie centrale.

En alternative, l'organe de préhension de la boucle est monté coulissant à l'intérieur de la boucle.

Dans une configuration préférentielle, l'organe de préhension de la boucle est formé par une bande en matériau polymère ou textile.

Dans un autre développement, l'invention vise un harnais d'encordement qui comporte un connecteur textile selon l'un des modes de réalisation précédents.

De manière avantageuse, le harnais d'encordement comporte un connecteur textile agencé pour fermer un tour de cuisse.

Il est avantageux de prévoir que le connecteur textile est agencé pour fermer une ceinture.

L'invention a également pour objet un procédé de fabrication d'un connecteur textile qui est plus facile à mettre en oeuvre que les procédés de l'art antérieur.

Le procédé est remarquable en ce qu'il comporte :
- fournir une sangle comportant des première et deuxième extrémités opposées, la sangle comportant une première section,
- plier au moins une fois la sangle au moyen d'au moins une pliure et fixer ladite au moins une pliure, de manière à former une première extrémité de la sangle ayant une section supérieure à la première section, la pliure formant un organe de butée de la sangle,
- former une boucle avec la deuxième extrémité, l'ouverture de la boucle permettant le passage de la première extrémité, la boucle étant séparée de la première extrémité par une partie centrale,
- fixer un organe de préhension à la boucle

L'invention a également pour objet un procédé d'utilisation d'un connecteur textile qui est plus facile à verrouiller et déverrouiller que les procédés de l'art antérieur.

Le procédé est remarquable en ce qu'il comporte :
- fournir une sangle selon l'un des modes de réalisation précédents,
- passer la première extrémité dans la boucle,
- faire le tour de la section de la partie centrale avec la première extrémité, la première extrémité passant entre la boucle et la portion de la sangle sortant de la boucle

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente une vue schématique d'un premier mode de réalisation d'une sangle destinée à former le connecteur textile,
- la figure 2 représente une vue schématique d'un deuxième mode de réalisation d'une sangle destinée à former le connecteur textile,
- la figure 3 représente une vue schématique d'un connecteur textile formé à partir d'une sangle nouée,
- la figure 4 représente une vue schématique de l'ouverture d'un connecteur textile en tirant sur un organe de préhension fixé sur la boucle et sur la première extrémité de la sangle,
- les figures 5 et 6 représentent, de manière schématique, en coupe différents modes de réalisation de la première extrémité,
- la figure 7 illustre de façon schématique un harnais d'encordement muni de plusieurs connecteurs textiles participant au réglage du harnais.

### Description détaillée

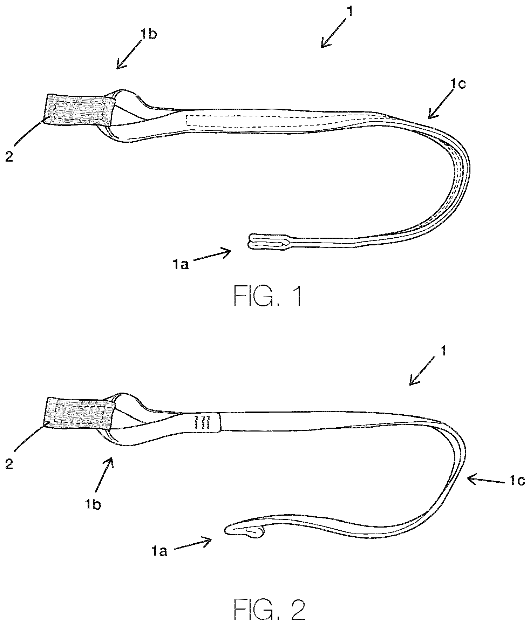

Comme illustré, aux figures 1, 2, 3 et 6, le connecteur textile comporte une sangle 1 qui possède des première et deuxième extrémités 1a et 1b séparées par une zone centrale 1c.

La zone centrale 1c possède une première section. De manière avantageuse, la zone centrale 1c possède une section constante pour faciliter le réglage du connecteur textile.

La première extrémité 1a possède une section plus importante que la première section. La deuxième extrémité 1b définit une boucle dont l'ouverture permet le passage de la première extrémité 1a.

La première section peut avoir une forme quelconque. A titre d'exemple, la première section peut être circulaire, mais il est avantageux de prévoir une première section rectangulaire comme cela est illustré sur les différentes figures. L'utilisation d'une section rectangulaire facilite la gestion du glissement en forçant le glissement selon les faces principales de la sangle ce qui limite également les déformations non prévues lors des glissements et des mises sous tension.

La première extrémité 1a peut également présenter une section quelconque identique ou différente de la première section dans sa forme générale, c'est-à-dire rectangulaire, carrée, circulaire ou autre. La première extrémité 1a présente une section dont la surface est supérieure à la surface de la première section d'une valeur au moins égale à 50%. De manière avantageuse, la surface est au moins égale à deux fois la valeur de la première section.

La deuxième extrémité 1b possède ou définit une boucle. La boucle est configurée pour autoriser le passage de la première extrémité 1a dans la boucle. De cette manière, en passant la première extrémité 1a dans la boucle, la sangle 1 forme un anneau ce qui permet de fermer le connecteur.

La sangle peut être formée dans un ou plusieurs matériaux différents afin d'obtenir les performances mécaniques recherchées. De manière avantageuse, la sangle 1 est formée avec les mêmes matériaux et la même répartition de matériaux d'une extrémité à l'autre ce qui facilite la conception et la répartition des efforts.

Dans un mode de réalisation particulièrement avantageux, l'ouverture de la boucle est fixe, c'est-à-dire que l'ouverture de la boucle ne peut pas évoluer. Pour rappel, la manille textile de l'art antérieur présente une boucle dont les dimensions évoluent afin de laisser passer le noeud opposé puis de l'étrangler pour verrouiller la manille.

La boucle fixe peut être réalisée en pliant la sangle et en fixant deux portions de la deuxième extrémité 1b de la sangle ensemble, par exemple par couture. Ce mode de réalisation est particulièrement intéressant car les risques d'usure prématurée liés aux frottements de la sangle sont réduits et/ou sont visibles. En effet, en cours d'utilisation et notamment en spéléologie, la manille textile est en contact de boues et de sédiments. Ces sédiments s'introduisent dans la manille de l'art antérieur et les mouvements de la corde lors de phases de verrouillage et de déverrouillage peuvent entrainer une usure de la corde ou des coincements. Cette usure peut être difficile à détecter dans la zone d'épissure qui est cachée.

Le connecteur comporte également un organe de préhension 2 de la boucle qui est fixé sur la boucle, c'est-à-dire sur la portion 1b de la sangle 1 qui définit la boucle. De manière avantageuse, l'organe de préhension 2 de la boucle est disposé à l'opposé de la partie centrale 1c ce qui permet de faciliter le déverrouillage du connecteur textile. Cependant en alternative, il est également possible de prévoir que l'organe de préhension 2 se trouve légèrement décalé de la position opposée à la partie centrale. Au maximum, un angle de 90° est possible dans un sens ou dans un autre. L'organe de préhension 2 peut aussi être monté coulissant dans la boucle, mais il est avantageux de maintenir l'organe de préhension dans une position fixe par coincement ou par couture. Comme illustré sur les différentes figures, l'organe de préhension est en saillie par rapport au pourtour de la boucle qui est ici réalisé par la sangle.

De manière avantageuse, l'organe de préhension 2 de la boucle, est formé par une bande qui est fixée sur la boucle. La configuration sous la forme d'une bande évite que l'organe de préhension 2 ne soit accroché par un élément extérieur comme cela peut être le cas avec la corde de l'art antérieur qui forme un anneau. La bande peut être réalisée en matériau polymère ou par un autre matériau, par exemple en cuir, en matériau textile enduit ou non enduit ou en polymère injecté. De manière avantageuse, la bande présente des sections longitudinale et/ou transversale rectangulaires. Cependant, des sections cylindriques, carrées ou autres sont également possibles mais sont moins pratiques.

Dans l'art antérieur, la corde servant d'organe de préhension est fixée dans la boucle afin d'ouvrir la boucle. Dans les modes de réalisation proposés, l'organe de préhension est utilisé pour former un point de préhension qui facilite le déverrouillage du connecteur, c'est-à-dire le desserrage du noeud utilisé pour fermer et verrouiller le connecteur. La boucle étant fixe, la taille de son ouverture ne peut pas être modulée en tirant sur l'organe de préhension.

Pour former le connecteur au moyen de la sangle 1, il est avantageux de réaliser les opérations suivantes.

La sangle 1 est fournie. La première extrémité passe une fois ou au moins une fois dans la boucle afin de former un anneau de sangle ou au moins un anneau de sangle qui ferme le connecteur. Un noeud est formé en sortie de la boucle de manière à verrouiller le connecteur textile.

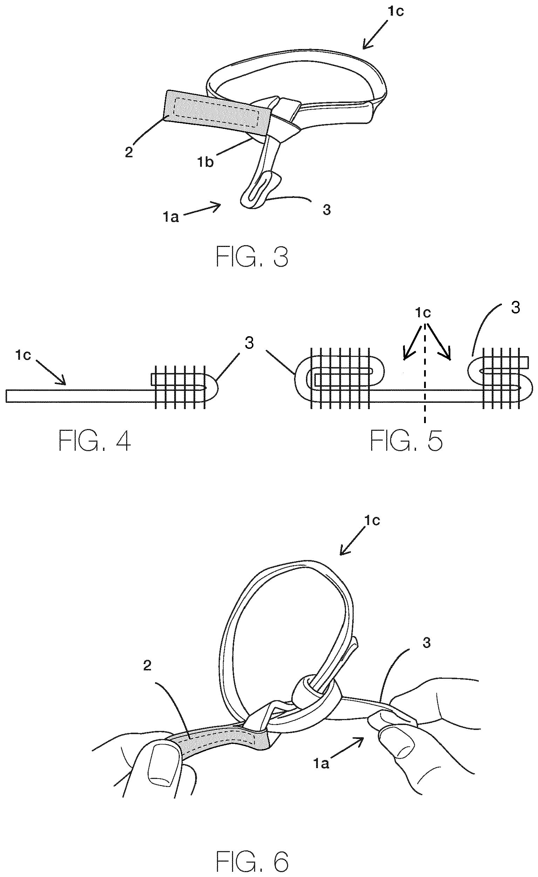

Le noeud peut être réalisé simplement en passant la première extrémité 1a de la sangle autour de la deuxième extrémité 1b, c'est-à-dire en faisant un tour de sangle autour de l'axe longitudinal de sangle. Lors du déplacement autour de l'axe longitudinal, la première extrémité 1a est insérée entre la deuxième extrémité 1b et la portion de sangle qui sort de la boucle comme illustré à la figure 3. La figure 3 illustre la réalisation d'un connecteur textile au moyen d'un noeud de tisserand, mais d'autres types de noeuds sont également possibles.

De cette manière, lorsque le connecteur est mis sous tension, le noeud se resserre et se déplace pour venir en butée contre l'extrémité de la boucle. La portion de sangle qui se trouve dans la boucle empêche la progression du noeud qui se serre de plus en plus. Plus le connecteur est mis sous tension et plus la pression exercée par le noeud est importante empêchant ainsi le déverrouillage du connecteur. Ce mode de réalisation est particulièrement efficace.

Ce mode de réalisation est particulièrement avantageux car la dimension du connecteur peut varier selon la partie de la sangle utilisée pour former le noeud. En effet, dans les dispositifs de l'art antérieur, tels que les mousquetons et les manilles textiles, la taille du dispositif est fixe et ne peut être modifiée. En revanche, en déplaçant la position du noeud, il est possible de faire évoluer la taille du connecteur textile. Ce type de connecteur textile peut donc être utilisé dans des situations plus variées que les produits de l'art antérieur.

Pour ouvrir le connecteur, il suffit de tirer sur l'organe de préhension 2 qui se trouve sur la boucle et sur la première extrémité afin de chercher à les écarter. Ainsi, le noeud s'écarte de la boucle et il devient possible de défaire le noeud. L'ouverture du connecteur est illustrée à la figure 6.

Afin d'augmenter la tenue mécanique du connecteur textile, il est possible de faire passer la sangle deux fois à l'intérieur de la boucle de manière à réaliser un connecteur qui comporte deux anneaux. Le noeud peut être réalisé de la même manière que précédemment.

Si la dimension de la partie centrale l'autorise, il est possible de faire passer la sangle plus de deux fois à l'intérieur de la boucle de manière à réaliser un connecteur qui comporte plus de deux anneaux. Le noeud peut être réalisé de la même manière que précédemment.

Il est également possible de réaliser un noeud qui comporte au moins deux passages de la sangle autour de la deuxième extrémité, c'est-à-dire en faisant au moins deux tours de sangle autour de l'axe longitudinal de la sangle. La première extrémité est ensuite insérée entre la deuxième extrémité et la portion de sangle qui sort de la boucle.

De manière avantageuse, la première extrémité comporte une butée de blocage 3 configurée pour empêcher le déverrouillage du noeud par exemple lorsque ce dernier n'a pas encore été mis sous tension. La butée de blocage 3 est formée par la première extrémité 1a de la sangle qui possède une section supérieure à la première section.

La butée de blocage 3 permet d'empêcher un déverrouillage du connecteur par glissement de la première extrémité qui peut retirer le noeud si ce dernier n'est pas mis sous tension. La butée de blocage permet d'empêcher que la première extrémité glisse entre la boucle et la portion de la sangle qui sort de la boucle de manière sensiblement perpendiculaire à la portion de sangle qui sort de la boucle.

La butée de blocage 3 est particulièrement avantageuse lorsque la tension exercée sur le connecteur est très forte. Dans ce cas de figure, la pression exercée sur le noeud est très forte et la sangle peut glisser jusqu'à la butée si le connecteur est fortement sollicité.

Là encore, le fonctionnement du connecteur textile est très différent de la manille de l'art antérieur. Dans la manille de l'art antérieur, l'ouverture de boucle est variable et se module afin d'empêcher le passage du noeud situé dans la première extrémité. Le noeud sert de butée de blocage lorsque le connecteur est sous tension. La boucle à ouverture variable étrangle le noeud pour éviter l'ouverture de la manille. La manille est verrouillée par le noeud qui est un élément fixe de la sangle.

De manière avantageuse, la butée de blocage 3 est formée par une zone qui fait saillie depuis une face de la sangle, par exemple depuis la zone centrale. Cette zone en saillie permet de mieux bloquer la butée de blocage entre les deux portions de la sangle formant le noeud.

La première extrémité 1a de la sangle 1 faisant un tour autour de la sangle, elle remonte vers la boucle et vient fermer la boucle jusqu'à bloquer la portion de la sangle qui traverse la boucle. La butée de blocage 3 vient donc en butée contre la partie centrale 1c de la sangle 1 ou contre la boucle.

Dans un mode de réalisation avantageux illustré à la figure 4, la sangle est repliée sur elle-même pour former la butée de blocage 3. Une première pliure est réalisée qui met en vis-à-vis une première zone pliée face à une deuxième zone pliée. Cette première pliure permet de former une surépaisseur. Il est particulièrement avantageux de former la butée de blocage au moyen d'une ou plusieurs pliures. La pliure permet de former une surépaisseur sur la sangle et ainsi former une butée de blocage qui présente une épaisseur au moins égale à la celle de la portion de sangle qui glisse.

Il est particulièrement avantageux de former une butée en extrémité de sangle au moyen d'une pliure. La pliure peut définir une boucle, mais l'ouverture de la boucle n'est pas configurée pour autoriser l'insertion de l'autre extrémité à l'intérieur de la boucle. Cela permet de renforcer la tenue mécanique de la sangle à l'extrémité sans gêner l'utilisation du connecteur.

La première pliure permet de former une surépaisseur qui empêche le glissement de la première extrémité et empêche le déverrouillage du connecteur textile. Ce mode de réalisation est particulièrement avantageux car il est facile à réaliser et il est particulièrement efficace. Cela permet d'éviter l'utilisation d'un autre matériau ayant des propriétés mécaniques différentes et qui réagit différemment sous contrainte et dans le temps.

De manière avantageuse, la pliure est configurée pour que les première et deuxième zones pliées ne soient pas fixées l'une à l'autre sur toute leur surface en vis-à-vis. En effet, il est particulièrement avantageux de prévoir que la partie distale de la pliure soit laissée libre. Dans ce cas de figure, les deux portions de la sangle qui se font face et qui ne sont pas fixées l'une à l'autre s'écartent pour laisser passer la sangle qui vient se bloquer et empêcher le déverrouillage du noeud. La fixation des première et deuxième zones pliées est avantageusement réalisée par couture illustrée par des traits verticaux sur les figures 4 et 5.

En ayant une extrémité de la zone pliage qui est libre, la sangle s'introduit facilement dans la butée de blocage jusqu'à être complètement bloquée. La force de blocage est progressive ce qui réduit les risques de déverrouillage en comparaison d'un autre mode de réalisation où l'extrémité opposée à la pliure est fixée.

Dans un mode de réalisation illustré à la figure 5, la première extrémité comporte des première et deuxième pliures successives qui définissent l'organe de blocage. La première pliure permet de former une première surépaisseur et la deuxième pliure permet d'accroître cette surépaisseur. Dans ce cas de figure, l'organe de blocage 3 possède une épaisseur trois fois plus importante que l'épaisseur dans la zone centrale.

Comme pour le mode de réalisation précédent, il peut être avantageux de ne pas fixer l'extrémité de la zone de pliage qui est opposée à l'extrémité physique de la sangle formant le connecteur afin de faciliter le blocage de la sangle, c'est-à-dire l'extrémité de la zone de pliage qui va recevoir la partie centrale.

Dans un mode de réalisation particulier illustré sur la partie gauche de la figure 5, les première et deuxième pliures sont configurées pour former une spirale en vue de coupe selon l'axe longitudinal de la sangle. La première zone de pliage est repliée sur elle-même afin de s'enrouler autour de l'extrémité physique de la sangle. Ce mode de réalisation est particulièrement intéressant car la sangle va glisser jusqu'à atteindre l'organe de blocage qui est épais, arrondi et plus rigide à cause de la première pliure. Dans ce cas de figure, la sangle se bloque facilement contre l'organe de blocage.

Il est également possible de réaliser la deuxième pliure dans le sens opposé en formant un S dans une vue en coupe selon l'axe longitudinal de la sangle. Ce mode de réalisation est illustré sur la partie droite de la figure 5.

Dans un mode de réalisation particulièrement avantageux illustré à la figure 1, la sangle est doublée c'est-à-dire qu'elle est formée par deux sangles élémentaires au moins dans la portion centrale 1c et avantageusement dans la première extrémité 1a. Dans un mode de réalisation particulier, une première sangle est repliée sur elle-même afin de définir la boucle. Les deux brins de sangle sont fixés ensemble dans la partie centrale 1c ce qui permet également de définir la boucle fixe. Les deux extrémités de la première sangle sont repliées sur elles-mêmes afin de former deux organes de blocage 3 élémentaires, les deux zones pliées sont fixées l'une à l'autre afin de former la première extrémité 1a avec son organe de blocage 3. De cette manière, une surépaisseur fait saillie de chaque côté de la sangle ce qui rend l'organe de blocage particulièrement efficace.

Dans un mode de réalisation particulièrement avantageux, les deux pliures de la première extrémité 1a sont dirigées vers les faces internes de la sangle, c'est-à-dire les faces en contact dans la zone centrale 1c de sorte que la surépaisseur soit progressive. Ce mode de réalisation est particulièrement robuste car l'organe de blocage 3 ne travaille pas en pelage et notamment lorsqu'il est formé par couture.

La sangle textile est particulièrement avantageuse car elle est légère et sa tenue mécanique peut facilement être adaptée en modifiant le matériau formant la sangle et/ou les dimensions de la sangle, ici la largeur et/ou l'épaisseur de la sangle.

La réalisation d'un tel connecteur est également particulièrement aisé car le procédé de fabrication peut être dépourvu d'étape d'épissure. Le procédé de réalisation peut être réalisé avec uniquement des étapes de fixation, par exemple par couture et des étapes de découpe à partir d'une sangle ou d'une corde conventionnelle.

Le procédé de fabrication d'un connecteur comporte avantageusement les étapes suivantes.

Dans une première étape, une sangle est fournie. La sangle comporte des première et deuxième extrémités opposées qui sont séparées par une partie centrale. La sangle présente une première section.

Dans une deuxième étape, un organe de butée de la sangle est formé sur la première extrémité de la sangle. Un organe de butée et/ou une surépaisseur peut être placé sur la sangle puis fixé à la sangle. En alternative, la surépaisseur est formée au moyen d'une pliure de la sangle et il est également avantageux d'utiliser la surépaisseur pour former l'organe de butée 3.

La sangle est pliée au moins une fois au moyen d'au moins une pliure. La pliure permet de former une première extrémité 1a de la sangle ayant une section supérieure à la première section. La pliure est fixée par exemple par couture.

Dans une troisième étape, une boucle est formée. De manière avantageuse, la boucle est formée par la sangle en repliant la sangle sur elle-même dans la deuxième extrémité 1b. En alternative, une boucle distincte de la sangle est posée puis fixée sur la sangle. L'ouverture de la boucle permet le passage de la première extrémité. La boucle est séparée de la première extrémité 1a par une partie centrale 1c de la sangle.

Dans une quatrième étape, l'organe de préhension 2 est fixé à la boucle.

Pour former le connecteur, les étapes peuvent être réalisées dans l'ordre indiqué, mais il est également possible de former la boucle avant ou après avoir formé la surépaisseur et/ou l'organe de blocage 3.

Ce qui est indiqué pour une sangle peut être réalisé à une corde.

Il est également possible de fixer l'organe de préhension 2 avant ou après avoir formé la boucle. Il est également possible de fixer l'organe de préhension 2 avant ou après avoir formé la surépaisseur et/ou l'organe de blocage 3.

Le connecteur textile permet de changer rapidement et facilement la dimension de l'anneau tout en assurant un blocage sûr et efficace, il trouve sont application dans de nombreux domaines.

Comme indiqué plus haut, le connecteur remplace avantageusement un mousqueton car il est plus léger et il évite de travailler en porte à faux dans des configurations compliquées. Il est également plus facile d'utilisation que les dispositifs connus du domaine du nautisme et du parapente car il est facile de modifier la dimension de l'anneau et de desserrer le noeud.

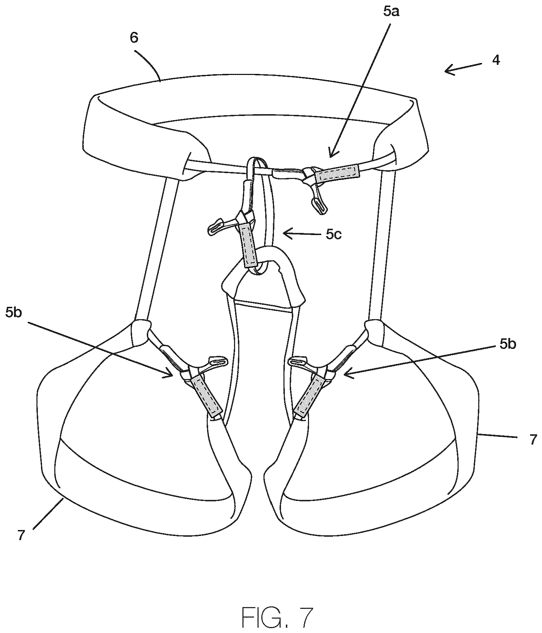

Le connecteur textile peut également être utilisé afin de participer au réglage d'un harnais 4. Dans le mode de réalisation illustré à la figure 7, un premier connecteur 5a est utilisé pour régler la dimension de la ceinture 6 du harnais 4. Ce mode de réalisation permet d'ouvrir entièrement la ceinture 6 du harnais 4 ce qui permet de faciliter sa mise en place, par exemple en alpinisme. Le harnais 4 comporte également des deuxièmes connecteurs 4b utilisés pour refermer les deux tours de cuisse 7 dans un harnais 4, par exemple dans un harnais d'alpinisme où l'utilisateur enfile son harnais 4 alors qu'il utilise déjà des skis ou des crampons. Le connecteur 5b permet une ouverture aisée du tour de cuisse 7 et ensuite son réglage. Il est alors possible de réaliser un harnais 4 plus léger et qui est avantageusement complètement textile. Le harnais 4 comporte également un troisième connecteur 5c utilisé pour former un pontet qui relie mécaniquement les tours de cuisses 7 avec la ceinture 6. Bien entendu, selon les configurations recherchées, le harnais 4 peut comporter tous ces connecteurs ou uniquement le premier connecteur 5a, les deuxièmes connecteurs 5b ou le troisième connecteur 5c. Il encore possible de prévoir un harnais 4 qui comporte le premier connecteur 5a et les deuxièmes connecteurs 5b ou le troisième connecteur 5c. En alternative, il est possible de prévoir un harnais 4 qui comporte les deuxièmes connecteurs 5b et le premier connecteur 5a ou le troisième connecteur 5c.

Le connecteur 5a, 5b, 5c peut être fixé sur le harnais 4 ou il peut être rendu captif au moyen d'une boucle qui empêche l'extraction du connecteur en empêchant le passage de la surépaisseur liée à la boucle et/ou la surépaisseur liée à la première extrémité.

Il est particulièrement avantageux de former un harnais dont le diamètre des tours de cuisse est rendu réglable en utilisant le connecteur textile proposé. Comme indiqué plus haut, le noeud formé par le connecteur textile permet de bloquer la partie centrale. Il est alors possible de moduler le diamètre du connecteur textile et donc le diamètre du tour de cuisse. Pour rappel, un connecteur textile à étranglement possède un diamètre fixe sous tension ce qui ne permet pas de moduler les diamètres des tours de cuisse. Par ailleurs, les autres connecteurs textiles de l'art antérieur ne sont pas adaptés pour fermer un harnais et/ou un tour de cuisse. Selon les configurations, le connecteur permet de former un tour de cuisse qui peut s'ouvrir complètement ou un tour de cuisse fermé et réglable. Il est également plus simple de fixer le connecteur textile sur le tour de cuisse par exemple par couture éviter tout risque de perte lors de son utilisation.

D'une manière générale, le connecteur peut être utilisé pour former différents anneaux sur un harnais et notamment, un anneau de type porte-matériel sur une ceinture 6 ou sur une bretelle de harnais (non représenté). Il est encore possible de former un connecteur reliant la ceinture du harnais à une bretelle de harnais.

Il est encore possible de prévoir que le connecteur intervient dans la fixation d'un piolet avec la main de l'utilisateur.

## Revendications

1. Connecteur textile (1) comprenant :
• une sangle ayant une partie centrale (1c) séparant une première extrémité (1a) et une deuxième extrémité (1b), la partie centrale (1c) ayant une première section,
• la première extrémité (1a) possédant une section plus importante que la partie centrale (1c),
• la deuxième extrémité (1b) possédant une boucle à ouverture fixe autorisant le passage de la première extrémité (1a) dans l'ouverture de la boucle,
• un organe de préhension (2) de la boucle connecté directement à la boucle,
tel que la sangle possède une section rectangulaire et que la première extrémité (1a) présente une zone repliée de la sangle sur elle-même au moyen d'une première pliure de manière à former une butée de blocage (3) configurée pour empêcher le passage de la partie centrale (1c) ou de la deuxième extrémité (1b) au-dessus de la deuxième extrémité (1b) lorsque la partie centrale (1c) glisse le long de la sangle.

2. Connecteur selon la revendication 1, dans lequel la deuxième extrémité (1b) comporte une seconde pliure, la butée de blocage (3) est formée par la seconde pliure.

3. Connecteur selon l'une quelconque des revendications précédentes, **caractérisé en ce que** l'organe de préhension (2) de la boucle est fixé à la boucle de manière opposée à la partie centrale.

4. Connecteur selon l'une quelconque des revendications 1 et 2, **caractérisé en ce que** l'organe de préhension (2) de la boucle est monté coulissant à l'intérieur de la boucle.

5. Connecteur selon l'une quelconque des revendications précédentes, **caractérisé en ce que** l'organe de préhension (2) de la boucle est formé par une bande en matériau polymère ou textile.

6. Harnais d'encordement comportant un connecteur textile selon l'une quelconque des revendications précédentes.

7. Harnais d'encordement selon la revendication 6, dans lequel le connecteur textile (5b) est agencé pour fermer un tour de cuisse (7).

8. Harnais d'encordement selon la revendication 6, dans lequel le connecteur textile (5a) est agencé pour fermer une ceinture (6).

9. Procédé de fabrication d'un connecteur textile comportant:
- fournir une sangle comportant des première et deuxième extrémités opposées (1a, 1b), la sangle comportant une première section,
- plier au moins une fois la sangle au moyen d'au moins une pliure et fixer ladite au moins une pliure, de manière à former une première extrémité (1a) de la sangle ayant une section supérieure à la première section, la pliure formant un organe de butée de la sangle,
- former une boucle avec la deuxième extrémité (1b), l'ouverture de la boucle permettant le passage de la première extrémité (1a), la boucle étant séparée de la première extrémité (1a) par une partie centrale (1c),
- fixer un organe de préhension (2) à la boucle.

10. Procédé d'utilisation d'un connecteur selon la revendication 1 comportant :
- fournir un connecteur selon la revendication 1,
- passer la première extrémité (1a) dans la boucle,
- faire le tour de la section de la partie centrale (1c) avec la première extrémité (1a), la première extrémité (1a) passant entre la boucle et la portion de la sangle sortant de la boucle.

## Patentansprüche

1. Textiles Verbindungselement (1), umfassend:
• ein Band mit einem zentralen Teil (1c), der ein erstes Ende (1a) und ein zweites Ende (1b) trennt, wobei der zentrale Teil (1c) einen ersten Querschnitt aufweist,
• wobei das erste Ende (1a) einen größeren Querschnitt aufweist als der zentrale Teil (1c),
• wobei das zweite Ende (1b) eine Schleife mit festgelegter Öffnung aufweist, die den Durchgang des ersten Endes (1a) durch die Öffnung der Schleife gestattet,
• ein Greifelement (2) der Schleife, das direkt mit der Schleife verbunden ist,
wobei das Band einen rechteckigen Querschnitt aufweist, und wobei das erste Ende (1a) eine in sich gefaltete Zone des Bands mit einer ersten Falte aufweist, um einen Blockierungsanschlag (3) zu bilden, der ausgelegt ist, den Durchgang des zentralen Teils (1c) oder des zweiten Endes (1b) über dem zweiten Ende (1b) zu verhindern, wenn der zentrale Teil (1c) das Band entlang gleitet.

2. Verbindungselement nach Anspruch 1, wobei das zweite Ende (1b) eine zweite Falte umfasst, und der Blockierungsanschlag (3) von der zweiten Falte gebildet wird.

3. Verbindungselement nach einem der vorhergehenden Ansprüche, **dadurch gekennzeichnet, dass** das Greifelement (2) der Schlaufe an der Schlaufe gegenüber dem zentralen Teil befestigt ist.

4. Verbindungselement nach einem der Ansprüche 1 und 2, **dadurch gekennzeichnet, dass** das Greifelement (2) der Schlaufe gleitend im Inneren der Schlaufe montiert ist.

5. Verbindungselement nach einem der vorhergehenden Ansprüche, **dadurch gekennzeichnet, dass** das Greifelement (2) der Schlaufe aus einem Streifen aus Polymer- oder Textilmaterial gebildet ist.

6. Anseilgut, umfassend ein textiles Verbindungselement nach einem der vorhergehenden Ansprüche.

7. Anseilgut nach Anspruch 6, wobei das textile Verbindungselement (5b) angeordnet ist, um ein Oberschenkelgeschirr (7) zu verschließen.

8. Anseilgut nach Anspruch 6, wobei das textile Verbindungselement (5a) angeordnet ist, um ein Hüftgeschirr (6) zu verschließen.

9. Verfahren zur Herstellung eines textilen Verbindungselements, umfassend:
- Bereitstellen eines Bands, das ein erstes und zweites gegenüberliegendes Ende (1a, 1b) umfasst, wobei das Band einen ersten Querschnitt aufweist,
- mindestens einmaliges Falten des Bands mit einer Falte und Befestigen der mindestens einen Falte, um ein erstes Ende (1a) des Bands zu bilden, das einen größeren Querschnitt aufweist als den ersten Querschnitt, wobei die Falte ein Anschlagelement des Bands bildet,
- Bilden einer Schleife mit dem zweiten Ende (1b), wobei die Öffnung der Schleife den Durchgang des ersten Endes (1a) gestattet, wobei die Schleife von dem ersten Ende (1a) durch einen zentralen Teil (1c) getrennt wird,
- Befestigen eines Greifelements (2) an der Schleife.

10. Verfahren zur Verwendung eines Verbindungselements nach Anspruch 1, umfassend:
- Bereitstellen des Verbindungselements nach Anspruch 1,
- Führen des ersten Endes (1a) durch die Schlaufe,
- Rundherumführen des Querschnitts des zentralen Teils (1c) mit dem ersten Ende (1a), wobei das erste Ende (1a) zwischen der Schlaufe und dem Abschnitt des Bands, der aus der Schleife austritt, hindurchgeht.

## Claims

1. Textile connector (1) comprising:
- a strap having a central part (1c) separating a first end (1a) and a second end (1b), the central part (1c) having a first cross-section,
• the first end (1a) having a larger cross-section than the central part (1c),
• the second end (1b) having a loop with a fixed opening allowing the first end (1a) to pass through the opening of the loop,
- a means (2) for gripping the loop connected directly to the loop,
such that the strap has a rectangular cross-section and that the first end (1a) presents an area of the strap that is folded onto itself by means of a first fold so as to form a blocking stop (3) configured to prevent the central part (1c) or the second end (1b) from passing over the second end (1b) when the central part (1c) slides along the strap.

2. Connector according to claim 1, wherein the second end (1b) comprises a second fold, the blocking stop (3) being formed by the second fold.

3. Connector according to either one of the foregoing claims, **characterised in that** the means (2) for gripping the loop are fixed to the loop in opposite manner to the central part.

4. Connector according to either one of claims 1 and 2, **characterised in that** the means (2) for gripping the loop are fitted sliding inside the loop.

5. Connector according to any one of the foregoing claims, **characterised in that** the means (2) for gripping the loop are formed by a strip of polymer or textile material.

6. Roping harness comprising a textile connector according to any one of the foregoing claims.

7. Roping harness according to claim 6, wherein the textile connector (5b) is arranged so as to close a leg loop (7).

8. Roping harness according to claim 6, wherein the textile connector (5b) is arranged so as to close a belt (6).

9. Method for manufacturing a textile connector comprising:
- providing a strap comprising opposite first and second ends (1a, 1b), the strap comprising a first cross-section,
- folding the strap at least once by means of at least one fold and fixing said at least one fold so as to form a first end (1a) of the strap having a larger cross-section than the first cross-section, the fold forming a stopping means of the strap,
- forming a loop with the second end (1b), the opening of the loop enabling the first end (1a) to pass, the loop being separated from the first end (1a) by a central part (1c),
- fixing a gripping means (2) to the loop.

10. Method for using a connector according to claim 1 comprising:
- providing a connector according to claim 1,
- running the first end (1a) through the loop,
- passing the first end (1a) round the cross-section of the central part (1c), the first end (1a) passing between the loop and the portion of the strap exiting from the loop.
